# EUROPEAN PATENT APPLICATION

(11) **EP 4 480 334 A1**
(43) Date of publication of application: **25.12.2024**
(21) Application number: 22933420.6
(22) Date of filing: 24.03.2022
(51) Int. Cl.: A24F 40/57

(54) **AEROSOL GENERATION SYSTEM, CONTROL METHOD, AND PROGRAM**

(71) Applicant: Japan Tobacco Inc., Tokyo 105-6927 (JP)
(72) Inventor: MINATO, Junji, Tokyo 130-8603 (JP); NAGAHAMA, Toru, Tokyo 130-8603 (JP); AOYAMA, Tatsunari, Tokyo 130-8603 (JP)
(74) Representative: Hoffmann Eitle
(86) International application number: PCT/JP2022/014056
(87) International publication number: WO 2023/181279

(57) **Abstract**

Provided is a mechanism capable of further improving flavor delivered to a user. An aerosol generation system comprising: a power supply unit (111); a heating unit (121) that heats an aerosol source using power supplied from the power supply unit; and a control unit (116) that controls the power supply from the power supply unit to the heating unit by PID control based on control information for controlling the temperature at which the aerosol source is heated, wherein the control unit controls the power supply from the power supply unit to the heating unit while switching parameters applied to the PID control in accordance with the elapsed time since the start of the control based on the control information or the transition of the temperature at which the aerosol source is heated.

## Description

### Technical Field

The present invention relates to an aerosol generation system, a control method, and a program.

### Background Art

Inhaler devices that generate a substance to be inhaled by a user, such as electronic cigarettes and nebulizers, are in widespread use. For example, such an inhaler device generates, by use of a substrate, an aerosol to which a flavor component has been imparted. The substrate includes, for example, an aerosol source for generating the aerosol, and a flavor source for imparting the flavor component to the generated aerosol. The user can taste a flavor by inhaling the aerosol that has been generated by the inhaler device and to which the flavor component has been imparted. The user's action of inhaling the aerosol is hereinafter referred to also as puff or puff action.

Various techniques are under study to improve the quality of the user's experience when using an inhaler device. For example, Patent Literature 1 below discloses a technique that, through a proportional-integral-differential (PID) system, controls supply of electric power to a heater that heats an aerosol-source material.

### Citation List

### Patent Literature

Patent Literature 1: JP 2021-512603 A

### Summary of Invention

### Technical Problem

The technique disclosed in Patent Literature 1, however, is still in the early days of development, and has room for improvements in various respects.

The present invention is directed to addressing the problem mentioned above. Accordingly, it is an object of the present invention to provide a mechanism capable of further improving the smoke taste that is delivered to the user.

### Solution to Problem

To address the problem mentioned above, an aspect of the present invention provides an aerosol generation system. The aerosol generation system includes a power supply, a heater, and a controller. The heater is configured to heat an aerosol source by using electric power supplied from the power supply. The controller is configured to, through a PID control based on control information, control supply of electric power from the power supply to the heater. The control information is information for controlling a temperature at which the aerosol source is heated. The controller is configured to control the supply of electric power from the power supply to the heater while switching parameters to be applied to the PID control. The parameters are switched in accordance with a time elapsed after start of a control based on the control information or in accordance with transition of the temperature at which the aerosol source is heated.

A period during which the control based on the control information is performed may include a first period, and a second period subsequent to the first period. The first period may be a period during which the temperature at which the aerosol source is heated rises to reach a predetermined temperature. The second period may be a period during which the temperature at which the aerosol source is heated is maintained at the predetermined temperature.

A P-gain to be applied for the first period may be larger than a P-gain to be applied for the second period.

An I-gain to be applied for the second period may be larger than an I-gain to be applied for the first period.

The first period may be a period from when the supply of electric power to the heater is started until the temperature at which the aerosol source is heated rises to reach the predetermined temperature.

The first period may be a period from when the control based on the control information is started until the temperature at which the aerosol source is heated rises to reach the predetermined temperature.

The first period may be a period that is subsequent to when the supply of electric power to the heater is interrupted at a point during the control based on the control information, and that is from when the supply of electric power to the heater is resumed until the temperature at which the aerosol source is heated rises to reach the predetermined temperature.

The first period may be triggered to end when the temperature at which the aerosol source is heated reaches the predetermined temperature.

The period during which the control based on the control information is performed may include a third period, and a fourth period subsequent to the third period. The third period may be a period during which a first voltage is applied to the heater. The fourth period may be a period during which a second voltage lower than the first voltage is applied to the heater.

A P-gain to be applied for the third period may be smaller than a P-gain to be applied for the fourth period.

An I-gain to be applied for the third period may be smaller than an I-gain to be applied for the fourth period.

The third period may include the first period and the second period.

The fourth period may include the first period and the second period.

The period during which the control based on the control information is performed may include a fifth period between the third period and the fourth period. The fifth period may be a period during which the supply of electric power to the heater is interrupted. The controller may be configured to, in the fifth period, perform switching of a voltage to be applied to the heater from the first voltage to the second voltage.

The period during which the control based on the control information is performed may include, immediately after the fifth period, the first period included in the fourth period.

A maximum temperature at which the aerosol source is heated in the third period may be higher than a maximum temperature at which the aerosol source is heated in the fourth period.

The temperature at which the aerosol source is heated and that is controlled based on the control information may be a temperature of the heater.

The aerosol generation system may further include a substrate containing the aerosol source that is heated by the heater.

To address the problem mentioned above, another aspect of the present invention provides a control method for controlling an aerosol generation system. The aerosol generation system includes a power supply, and a heater configured to heat an aerosol source by using electric power supplied from the power supply. The control method includes, through a PID control based on control information, controlling supply of electric power from the power supply to the heater. The control information is information for controlling a temperature at which the aerosol source is heated. The controlling of the supply of electric power from the power supply to the heater includes controlling the supply of electric power from the power supply to the heater while switching parameters to be applied to the PID control. The parameters are switched in accordance with a time elapsed after start of a control based on the control information or in accordance with transition of the temperature at which the aerosol source is heated.

To address the problem mentioned above, another aspect of the present invention provides a program to be executed by a computer configured to control an aerosol generation system. The aerosol generation system includes a power supply, and a heater configured to heat an aerosol source by using electric power supplied from the power supply. The program causes the computer to function as a controller. The controller is configured to, through a PID control based on control information, control supply of electric power from the power supply to the heater. The control information is information for controlling a temperature at which the aerosol source is heated. The controller is configured to control the supply of electric power from the power supply to the heater while switching parameters to be applied to the PID control. The parameters are switched in accordance with a time elapsed after start of a control based on the control information or in accordance with transition of the temperature at which the aerosol source is heated.

### Advantageous Effects of Invention

As has been described above, the present invention provides a mechanism capable of further improving the smoke taste that is delivered to the user.

### Brief Description of Drawings

[Fig. 1] Fig. 1 is a schematic diagram of an inhaler device according to a configuration example.
[Fig. 2] Fig. 2 is a graph illustrating an example of transition of the temperature of a heater for a case where temperature control is performed based on a heating profile illustrated in Table 1.
[Fig. 3] Fig. 3 is a graph illustrating, in detail, an example of the transition of the temperature of the heater illustrated in Fig. 2.
[Fig. 4] Fig. 4 is a flowchart illustrating an exemplary procedure to be executed by the inhaler device according to the embodiment.

### Description of Embodiments

A preferred embodiment of the present invention is described below in detail with reference to the accompanying drawings. Herein and in the drawings, structural elements that are substantially identical to each other in functional configuration are designated by the same reference signs to omit redundant description.

### 1. Configuration example of inhaler device

An inhaler device generates material to be inhaled by a user. In the example described below, the material generated by the inhaler device is an aerosol. Alternatively, the material generated by the inhaler device may be gas.

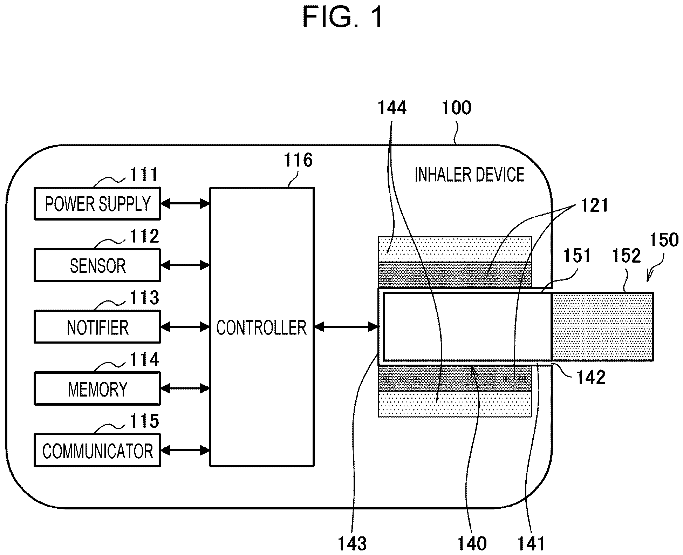

Fig. 1 is a schematic diagram of the inhaler device according to a configuration example. As illustrated in Fig. 1, an inhaler device 100 according to the present configuration example includes a power supply 111, a sensor 112, a notifier 113, a memory 114, a communicator 115, a controller 116, a heater 121, a holder 140, and a heat insulator 144.

The power supply 111 stores electric power. The power supply 111 supplies electric power to the structural elements of the inhaler device 100 under the control of the controller 116. The power supply 111 may be a rechargeable battery such as a lithium ion secondary battery.

The sensor 112 acquires various items of information regarding the inhaler device 100. In an example, the sensor 112 may be a pressure sensor such as a condenser microphone, a flow sensor, or a temperature sensor, and acquire a value generated in accordance with the user's inhalation. In another example, the sensor 112 may be an input device that receives information input by the user, such as a button or a switch.

The notifier 113 provides information to the user. The notifier 113 may be a light-emitting device that emits light, a display device that displays an image, a sound output device that outputs sound, or a vibration device that vibrates.

The memory 114 stores various items of information for operation of the inhaler device 100. The memory 114 may be a non-volatile storage medium such as flash memory.

The communicator 115 is a communication interface capable of communication in conformity with any wired or wireless communication standard. Such a communication standard may be, for example, Wi-Fi (registered trademark), Bluetooth (registered trademark), or a standard using a low-power wide-area network (LPWAN).

The controller 116 functions as an arithmetic processing unit and a control circuit, and controls the overall operations of the inhaler device 100 in accordance with various programs. The controller 116 includes an electronic circuit such as a central processing unit (CPU) or a microprocessor, for example.

The holder 140 has an internal space 141, and holds a stick substrate 150 in a manner partially accommodated in the internal space 141. The holder 140 has an opening 142 that allows the internal space 141 to communicate with outside. The holder 140 holds the stick substrate 150 that is inserted into the internal space 141 through the opening 142. For example, the holder 140 may be a tubular body having the opening 142 and a bottom 143 on its ends, and may define the pillar-shaped internal space 141. The holder 140 connects with an airflow path that supplies air to the internal space 141. For example, a side surface of the inhaler device 100 has an air inlet hole that is an inlet of air into the airflow path. For example, the bottom 143 has an air outlet hole that is an outlet of the air from the airflow path to the internal space 141.

The stick substrate 150 includes a substrate 151 and an inhalation port 152. The substrate 151 includes an aerosol source. The aerosol source is a liquid such as polyhydric alcohol or water. Examples of the polyhydric alcohol include glycerine and propylene glycol. The aerosol source may include a flavor component that is either derived from tobacco or not derived from tobacco. For the inhaler device 100 that is a medical inhaler such as a nebulizer, the aerosol source may include a medicine. According to the configuration example, the aerosol source is not limited to a liquid but may be a solid. The stick substrate 150 held by the holder 140 includes the substrate 151 at least partially accommodated in the internal space 141 and the inhalation port 152 at least partially protruding from the opening 142. When the user inhales with the inhalation port 152 protruding from the opening 142 in his/her mouth, air flows into the internal space 141 through the airflow path (not illustrated), and the air and an aerosol generated from the substrate 151 reach inside the mouth of the user.

The heater 121 heats the aerosol source to atomize the aerosol source and generate the aerosol. In the example illustrated in Fig. 1, the heater 121 has a film-like shape and surrounds the outer circumference of the holder 140. Subsequently, heat produced from the heater 121 heats the substrate 151 of the stick substrate 150 from the outer circumference, generating the aerosol. The heater 121 produces heat when receiving electric power from the power supply 111. In an example, the electric power may be supplied in response to the sensor 112 detecting a start of the user's inhalation and/or an input of predetermined information. Subsequently, the supply of the electric power may be stopped in response to the sensor 112 detecting an end of the user's inhalation and/or an input of predetermined information.

The heat insulator 144 prevents heat from transferring from the heater 121 to the other structural elements. For example, the heat insulator 144 may be a vacuum heat insulator or an aerogel heat insulator.

The configuration example of the inhaler device 100 has been described above. The inhaler device 100 is not limited to the above configuration, and may be configured in various ways as exemplified below.

In an example, the heater 121 may have a blade-like shape, and may be disposed so that the heater 121 protrudes from the bottom 143 of the holder 140 toward the internal space 141. In this case, the heater 121 having the blade-like shape is inserted into the substrate 151 of the stick substrate 150 and heats the substrate 151 of the stick substrate 150 from its inside. In another example, the heater 121 may be disposed so that the heater 121 covers the bottom 143 of the holder 140. In still another example, the heater 121 may be implemented as a combination of two or more selected from a first heater that covers the outer circumference of the holder 140, a second heater having the blade-like shape, and a third heater that covers the bottom 143 of the holder 140.

In another example, the holder 140 may include an opening/closing mechanism that at least partially opens and closes an outer shell defining the internal space 141. Examples of the opening/closing mechanism include a hinge. In addition, the holder 140 may sandwich the stick substrate 150 inserted into the internal space 141, by opening and closing the outer shell. In this case, the heater 121 may be at the sandwiching position of the holder 140 and may produce heat while pressing the stick substrate 150.

The stick substrate 150 is an example of a substrate that contains the aerosol source, and that contributes to aerosol generation. The inhaler device 100 is an example of an aerosol generation device that heats the stick substrate 150 to generate an aerosol. An aerosol is generated by the combination of the inhaler device 100 and the stick substrate 150. Accordingly, the combination of the inhaler device 100 and the stick substrate 150 may be regarded as an aerosol generation system.

### 2. Technical features

### 2.1. Heating profile

### (1) Overview

The controller 116 controls operation of the heater 121, based on a heating profile. Control of operation of the heater 121 is achieved through control of supply of electric power from the power supply 111 to the heater 121. The heater 121 heats the stick substrate 150 by using electric power supplied from the power supply 111.

A heating profile represents control information for controlling the temperature at which the aerosol source is heated. The heating profile may represent control information for controlling the temperature of the heater 121. In one example, the heating profile may include a target value for the temperature (to be also referred to as target temperature hereinafter) of the heater 121. The target temperature may vary with the time elapsed after the start of heating. In that case, the heating profile includes information that defines time-series transition of the target temperature. In another example, the heating profile may include parameters that define the manner in which electric power is supplied to the heater 121 (to be also referred to as power supply parameters hereinafter). Examples of power supply parameters include the voltage to be applied to the heater 121, the ON/OFF of the supply of electric power to the heater 121, and the feedback control method to be employed. The ON/OFF of the supply of electric power to the heater 121 may be regarded as the ON/OFF of the heater 121.

The controller 116 controls operation of the heater 121 in such a way that the temperature of the heater 121 (to be also referred to as "actual temperature" hereinafter) transitions in a manner similar to the target temperature defined in the heating profile. The heating profile is designed to optimize the flavor that the user tastes upon inhaling an aerosol generated from the stick substrate 150. Therefore, controlling operation of the heater 121 based on the heating profile allows for optimization of the flavor tasted by the user.

Temperature control of the heater 121 can be implemented by, for example, a known feedback control. The feedback control may be, for example, a proportional-integral-differential (PID) control. The controller 116 may cause the electric power from the power supply 111 to be supplied to the heater 121 in the form of pulses based on pulse width modulation (PWM) or pulse frequency modulation (PFM). In that case, the controller 116 is capable of controlling the temperature of the heater 121 by adjusting the duty cycle or frequency of electric power pulses during the feedback control. Alternatively, the controller 116 may perform a simple ON/OFF control during the feedback control. For example, the controller 116 may be configured to: cause the heating by the heater 121 to be executed until the actual temperature reaches a target temperature; cause the heating by the heater 121 to be interrupted when the actual temperature reaches the target temperature; and cause the heating by the heater 121 to resume when the actual temperature drops below the target temperature.

In one example, the temperature of the heater 121 can be quantified by measuring or estimating the electrical resistance of the heater 121 (more precisely, a heating resistor constituting the heater 121). This is because the electrical resistance of the heating resistor varies with temperature. The electrical resistance of the heating resistor can be estimated by, for example, measuring a voltage drop in the heating resistor. A voltage drop in the heating resistor can be measured by a voltage sensor that measures a potential difference applied to the heating resistor. In another example, the temperature of the heater 121 can be measured by a temperature sensor such as a thermistor installed in the vicinity of the heater 121.

A period from when the process of generating an aerosol by using the stick substrate 150 begins until the process ends is also referred to as "heating session" hereinafter. In other words, the heating session refers to a period during which the supply of electric power to the heater 121 is controlled based on the heating profile. The heating session begins when heating based on the heating profile is started. The heating session ends when a sufficient amount of aerosol ceases to be generated. The heating session includes a preheating period, and a puff-enabled period subsequent to the preheating period. The puff-enabled period refers to a period during which a sufficient amount of aerosol is expected to be generated. The preheating period refers to a period from when heating is started until the puff-enabled period begins. The heating performed in the preheating period is referred to also as preheating.

An example of the heating profile is illustrated in Table 1 below.

**[Table 1]**

| Table 1. Example of heating profile | | | | |
|---|---|---|---|---|
| Period | | Time-series transition of target temperature | Time-series transition of power supply parameters | |
| Division | Duration | | Voltage | ON/OFF |
| STEP 0 | - | Rise to 300°C (No time control) | High | ON |
| STEP 1 | 20 sec. | Maintained at 300°C | High | ON |
| STEP 2 | 20 sec. | Maintained at 300°C | High | ON |
| STEP 3 | 20 sec. | Drop to 220°C | Switch to low | OFF |
| STEP 4 | 20 sec. | Rise to 270°C | Low | ON |
| STEP 5 | 20 sec. | | Low | ON |
| STEP 6 | 20 sec. | | Low | ON |
| STEP 7 | 20 sec. | | Low | ON |
| STEP 8 | 40 sec. | Maintained at 270°C | Low | ON |
| STEP 9 | 20 sec. | - | Switch to high | OFF |

As illustrated in Table 1, the heating profile is divided into a plurality of periods. For each period, the time-series transition of target temperature, and the time-series transition of power supply parameters may be defined. In the example illustrated in Table 1, the heating profile is divided into a total of 10 periods including STEP 0 to STEP 9. For each STEP, the time-series transition of target temperature, and the time-series transition of power supply parameters are defined.

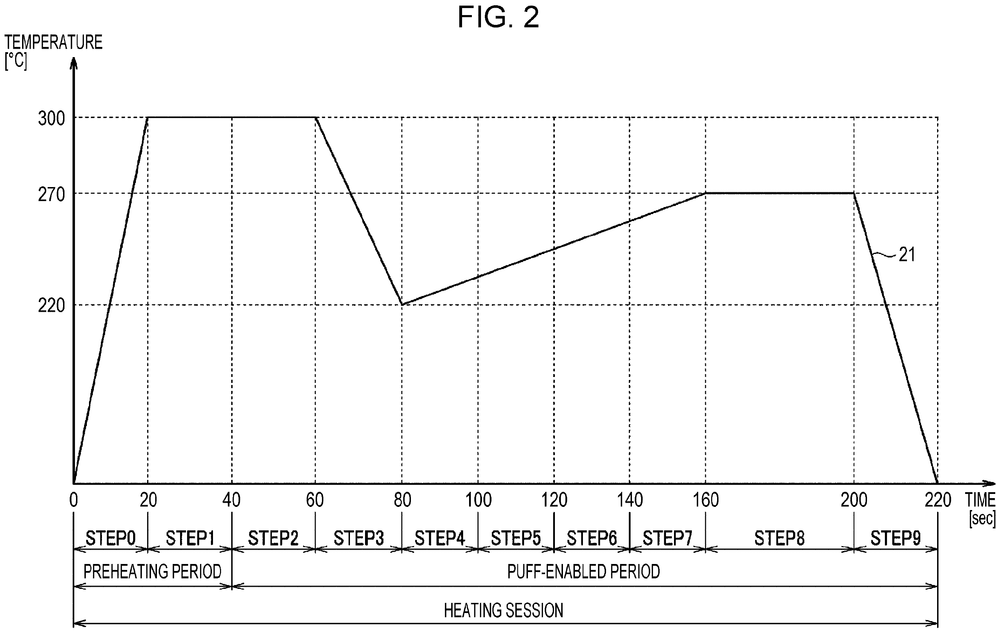

Reference is now made to Fig. 2 to describe transition of the temperature of the heater 121 for a case where the controller 116 performs temperature control in accordance with the heating profile illustrated in Table 1. Fig. 2 is a graph illustrating an example of transition of the temperature of the heater 121 for a case where temperature control is performed based on the heating profile illustrated in Table 1. The horizontal axis in the graph represents time (seconds). The vertical axis in the graph represents the temperature of the heater 121. A line 21 in the graph represents transition of the temperature of the heater 121. As illustrated in Fig. 2, the temperature of the heater 121 transitions in a manner similar to the transition of target temperature defined in the heating profile. An example of the heating profile is described below with reference to Table 1 and Fig. 2.

As illustrated in Table 1 and Fig. 2, in STEP 0, the temperature of the heater 121 rises from an initial temperature to 300°C. The initial temperature refers to the temperature of the heater 121 at the start of heating. In STEP 0, no time control is performed. A time control in this case refers to a control that sets also the time elapsed until a target value (target temperature in this case) defined in the heating profile is reached. That is, in STEP 0, according to the heating profile, a target value is set, but no target may be set for the elapsed time until the target value is reached. If a time control is to be performed, the corresponding STEP is triggered to end when its duration elapses. Since no time control is performed in STEP 0, STEP 0 is triggered to end when the temperature of the heater 121 reaches 300°C. In the example illustrated in Fig. 2, STEP 0 ends in 20 seconds. Subsequently, in STEP 1 and STEP 2, the temperature of the heater 121 is maintained at 300°C. The preheating period ends with the end of STEP 1, and the puff-enabled period starts with the start of STEP 2. When it is stated herein that no time control is performed in STEP 0, this does not preclude, for example, execution of a control such that, if a predetermined temperature is not reached within a predetermined time, an error is determined to have occurred and heating is stopped.

For the user, a shorter preheating time is more desirable. Inadequate heating of the stick substrate 150, however, can result in moisture remaining within the stick substrate 150 without evaporating. When the user takes a puff in such a state, this may cause hot water vapor to be delivered into the user's mouth. It is therefore desirable to rapidly raise the temperature of the heater 121 to 300°C in STEP 0, and ensure that STEP 1 has a reasonably long duration.

In STEP 0 to STEP 2, electric power is supplied to the heater 121 at a high voltage. This configuration makes it possible to cause the temperature of the heater 121 to reach 300°C as quickly as possible, and to maintain the high temperature thereafter. This configuration also makes it to shorten the preheating period.

As illustrated in Table 1 and Fig. 2, in STEP 3, the temperature of the heater 121 drops to 220°C. In STEP 3, supply of electric power to the heater 121 is turned off. This allows the temperature of the heater 121 to drop as quickly as possible. Meanwhile, the voltage to be applied to the heater 121 is switched from high to low. If voltage switching is performed while supply of electric power to the heater 121 is executed, the accuracy of temperature control may decrease due to, for example, noise being introduced into a gain used in the PID control. In this regard, performing voltage switching while supply of electric power to the heater 121 is not executed makes it possible to prevent a decrease in the accuracy of temperature control associated with such voltage switching.

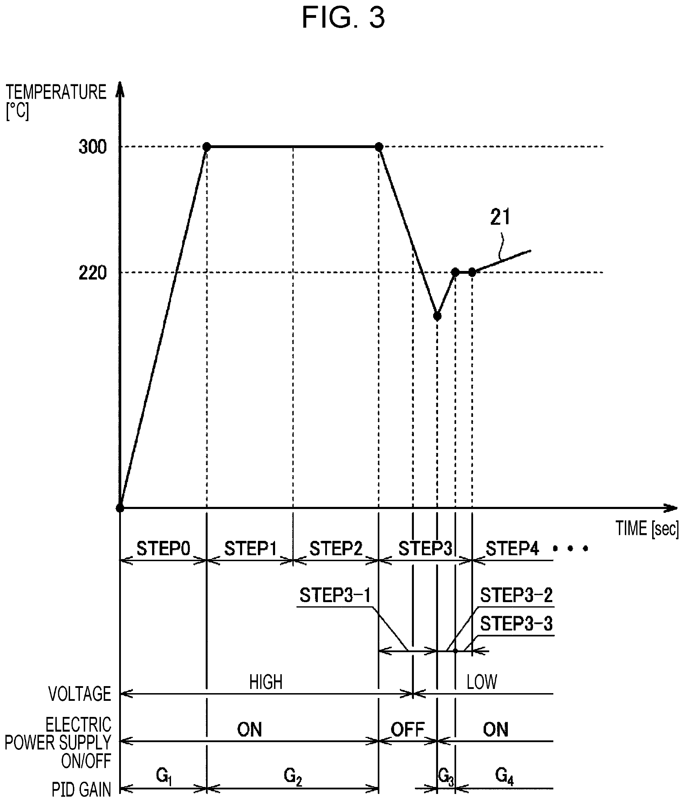

Now, the control in STEP 3 is described in more detail with reference to Fig. 3. Fig. 3 is a graph illustrating, in detail, an example of the transition of the temperature of the heater 121 illustrated in Fig. 2. Fig. 3 illustrates, in detail, a portion of the temperature transition of the heater 121 illustrated in Fig. 2 from STEP 0 to the first half part of STEP 4.

As illustrated in Fig. 3, STEP 3 is divided into three periods including STEP 3-1, STEP 3-2, and STEP 3-3. When the duration of STEP 2 elapses, then in STEP 3-1, which is the first part of STEP 3, the controller 116 interrupts the supply of electric power from the power supply 111 to the heater 121. This causes the temperature of the heater 121 to drop. An excessive drop in the temperature of the heater 121, however, may cause deterioration of the smoke taste delivered to the user. To address this, in STEP 3-2, which is the middle part of STEP 3, if the temperature of the heater 121 drops below 220°C, the supply of electric power to the heater 121 is resumed, and thus heating is resumed. To prevent deterioration of the smoke taste, it is desirable, in STEP 3-2, to rapidly raise the temperature of the heater 121 to 220°C. In STEP 3-1 and STEP 3-2, no time control is performed. For STEP 3 as a whole, however, a time control is performed. Accordingly, the controller 116 maintains the temperature of the heater 121 at 220°C in STEP 3-3, which corresponds to the period until the duration of STEP 3 ends. Of course, no time control may be performed for STEP 3 as a whole. In that case, STEP 3-3 is omitted.

As illustrated in Table 1 and Fig. 2, then, in STEP 4 to STEP 7, the temperature of the heater 121 rises slowly to 270°C. As described above, control information spanning a plurality of STEPs may be defined. Subsequently, in STEP 8, the temperature of the heater 121 is maintained at 270°C.

In STEP 4 to STEP 8, the supply of electric power to the heater 121 is executed at low voltage. This is because in STEP 4 to STEP 8, it is necessary neither to rapidly raise the temperature of the heater 121, nor to maintain the heater 121 at high temperature. The use of low voltage in STEP 4 to STEP 8 allows for reduced electric power consumption for the heating session as a whole.

As illustrated in Table 1 and Fig. 2, in STEP 9, the temperature of the heater 121 drops. In STEP 9, the supply of electric power to the heater 121 is turned off. Meanwhile, the voltage to be applied to the heater 121 is switched from low to high. This allows the next heating session to begin with high voltage. As described above, voltage switching is performed while supply of electric power to the heater 121 is not executed. This makes it possible to prevent a decrease in the accuracy of temperature control associated with such voltage switching. For STEP 9, a duration is defined, but no target temperature is defined. Accordingly, STEP 9 is triggered to end when the duration ends. In STEP 9, a sufficient amount of aerosol may be generated due to the residual heat remaining in the stick substrate 150. Accordingly, in the present example, the puff-enabled period, that is, the heating session ends with the end of STEP 9.

The user may be notified of the timing at which the puff-enabled period begins and the timing at which the puff-enabled period ends. For example, the user may receive notification when STEP 2 begins and when STEP 9 ends. The user can use such notification as a reference when taking a puff in the puff-enabled period.

The heating profile described above is intended to be an illustrative example only, and various other examples are conceivable. In one example, the number of STEPs, the duration of each individual STEP, and the target temperature may be changed as appropriate. In another example, a time control may be performed in STEP 0. For instance, in STEP 0, the temperature of the heater 121 may be raised from an initial temperature to 300°C, and then maintained at 300°C until the duration of STEP 0 ends. Alternatively, in STEP 0, the rate of temperature rise may be controlled in such a way that the temperature of the heater 121 reaches 300°C at the end of the duration of STEP 0. In another example, in STEP 4, the temperature of the heater 121 may be maintained at 220°C.

### (2) Details

An overview of the heating profile has been described above. Details of the heating profile are now described with reference to Fig. 2 and Fig. 3.

The heating session includes a first period, and a second period subsequent to the first period. That is, the first period is a period during which the temperature of the heater 121 rises to reach a predetermined temperature. The second period is a period during which the temperature of the heater 121 is maintained at the predetermined temperature. With regard to STEP 0 and STEP 1, STEP 0 corresponds to the first period, STEP 1 corresponds to the second period, and the predetermined temperature is 300°C. With regard to STEP 3, STEP 3-2 corresponds to the first period, STEP 3-3 corresponds to the second period, and the predetermined temperature is 220°C.

In this case, the first period is a period of time from when the supply of electric power to the heater 121 is started until the temperature of the heater 121 rises to reach a predetermined temperature. It is, however, to be noted that STEP 0 corresponds to a period from when a control based on the heating profile is started until the temperature of the heater 121 rises to reach a predetermined temperature In other words, STEP 0 corresponds to a period from when the supply of electric power to the heater 121 is started with the start of the heating session, until the temperature of the heater 121 rises to reach a predetermined temperature. In contrast, STEP 3-2 corresponds to a period that is subsequent to when the supply of electric power to the heater 121 is interrupted at a point during the control based on the heating profile, and that is from when the supply of electric power to the heater 121 is resumed until the temperature of the heater 121 rises to reach a predetermined temperature. In other words, STEP 3-2 corresponds to a period from when the supply of electric power to the heater 121 is resumed at a point during the heating session, until the temperature of the heater 121 rises to reach a predetermined temperature.

Each of STEP 0 and STEP 3-2, which corresponds to the first period, is triggered to end when the temperature of the heater 121 reaches a predetermined temperature. That is, in each of STEP 0 and STEP 3-2 corresponding to the first period, no time control is performed. This allows the temperature of the heater 121 to reach a predetermined temperature as quickly as possible in STEP 0 and STEP 3-2. In contrast, each of STEP 1 and STEP 3-3, which corresponds to the second period, is triggered to end when a duration defined in the heating profile elapses.

The heating session also includes a third period, and a fourth period subsequent to the third period. The third period is a period during which a first voltage is applied to the heater 121. The fourth period is a period during which a second voltage lower than the first voltage is applied to the heater 121. In the example illustrated in Fig. 2 and Fig. 3, STEP 0 to STEP 2 each correspond to the third period, and STEPs from STEP 3-2 onward each correspond to the fourth period. In particular, the third period includes STEP 0, which corresponds to the first period, and STEP 1, which corresponds to the second period. In particular, the fourth period includes STEP 3-2, which corresponds to the first period, and STEP 3-3, which corresponds to the second period. In other words, the first period includes STEP 0, which belongs to the third period, and STEP 3-2, which belongs to the fourth period. The second period includes STEP 1, which belongs to the third period, and STEP 3-3, which belongs to the fourth period.

The maximum temperature at which the aerosol source is heated in the third period may be higher than the maximum temperature at which the aerosol source is heated in the fourth period. In the example illustrated in Fig. 2 and Fig. 3, the former is 300°C and the latter is 270°C. The rate of rise in the temperature at which the aerosol source is heated in the third period may be larger than the rate of rise in the temperature at which the aerosol source is heated in the fourth period. The configurations mentioned above are easily implemented by making the voltage applied to the heater 121 in the third period higher than the voltage applied to the heater 121 in the fourth period.

The heating session includes a fifth period between the third period and the fourth period. The fifth period is a period during which the supply of electric power to the heater 121 is interrupted. In the fifth period, the controller 116 performs switching of the voltage to be applied to the heater 121 from the first voltage to the second voltage. In the example illustrated in Fig. 3, STEP 3-1 corresponds to the first period. As mentioned above, such a configuration makes it possible to prevent a decrease in the accuracy of temperature control associated with such voltage switching. The heating session includes, immediately after STEP 3-1 corresponding to the fifth period, STEP 3-2 corresponding to the first period included in the fourth period. That is, the heating session includes, immediately after a period during which supply of electric power to the heater 121 is interrupted, a period during which the temperature of the heater 121 rises. This makes it possible to prevent an excessive drop in the temperature of the heater 121, and consequently to prevent deterioration of the smoke taste delivered to the user

### 2.2. Control of PID gain

The controller 116 controls the supply of electric power from the power supply 111 to the heater 121, by means of a PID control based on the heating profile. The PID control is a method of controlling an input value to a controlled object by using the following three elements: the deviation between an output value from the controlled object, and a target value; the integral of the deviation; and the derivative of the deviation. According to the embodiment, the controlled object is the heater 121. The output value from the heater 121 is an actual temperature. The target value is a target temperature. The input value is a parameter that defines the amount of electric power to be supplied to the heater 121 (e.g., the duty cycle in a PWM control).

At least the following three parameters are involved in the PID control: a P-gain, an I-gain, and a D-gain. These parameters involved in the PID control are hereinafter collectively referred to also as PID gain. The P-gain is a coefficient by which to multiply the deviation. The I-gain is a coefficient by which to multiply the integral of the deviation. The D-gain is a coefficient by which to multiply the derivative of the deviation. For example, the controller 116 calculates the duty cycle at a given time by summing the following values: a value obtained by multiplying, by the P-gain, the deviation at that time between the actual temperature and the target temperature; a value obtained by multiplying, by the I-gain, the integral of the deviation; and a value obtained by multiplying, by the D-gain, the derivative of the deviation. One or two of the P-gain, the I-gain, and the D-gain may be set to zero.

Typically, increasing the P-gain makes it possible to shorten the time it takes for the actual temperature to reach the target temperature. An excessively large P-gain, however, increases the risk of overshoot and undershoot. That is, an excessively large P-gain leads to an increased amplitude of hunting in which the temperature oscillates up and down around the target temperature. In contrast, a smaller P-gain leads to a larger steady-state deviation.

Typically, increasing the D-gain helps to reduce the risk of overshoot and undershoot. That is, increasing the D-gain helps to reduce the amplitude of hunting.

Typically, increasing the I-gain helps to reduce steady-state deviation. An excessively large I-gain, however, leads to an increased risk of overshoot and undershoot, and an increased amplitude of hunting.

With reference again to Fig. 3, a detailed description is given below of the PID control according to the embodiment.

The heating profile includes two or more different PID gains. These PID gains are defined in accordance with the time elapsed after the start of the control based on the heating profile or in accordance with the transition of the temperature of the heater 121. In controlling the supply of electric power from the power supply 111 to the heater 121, the controller 116 switches PID gains in accordance with the time elapsed after the start of the control based on the heating profile or in accordance with the transition of the temperature of the heater 121. In the example illustrated in Fig. 3, the controller 116 uses a PID gain G₁ in STEP 0, a PID gain G₂ in STEP 1 and STEP 2, a PID gain G₃ in STEP 3-2, and a PID gain G₄ in STEP 3-3 and STEP 4. These PID gains are defined in the heating profile, together with information defining the timing when to switch the PID gains. For example, the controller 116 is triggered to switch which PID gain to use, when each STEP begins or ends or when the temperature of the heater 121 reaches a predetermined temperature. More specifically, the controller 116 is triggered to start using the PID gain G₁ when STEP 0 begins. Subsequently, the controller 116 is triggered to switch to the PID gain G₂ when the temperature of the heater 121 reaches 300°C. Subsequently, the controller 116 is triggered to switch to the PID gain G₃ when STEP 3-2 begins. Then, the controller 116 is triggered to switch to the PID gain G₄ when the temperature of the heater 121 reaches 220°C. The heating session includes periods that differ in how the temperature transitions, such as a period during which the temperature is raised as quickly as possible, a period during which the temperature is raised slowly, a period during which the temperature is dropped, and a period during which the temperature is maintained. According to such a configuration, operation of the heater 121 can be controlled by use of a PID gain that is most suitable for a specific manner in which the temperature transitions. This allows the actual temperature to accurately follow the target temperature defined in the heating profile. This in turn allows appropriate smoke taste to be delivered to the user throughout the heating session.

The PID gain G₁ is a PID gain for causing the temperature of the heater 121 to reach a predetermined temperature (i.e., 300°C) as quickly as possible. The PID gain G₂ is a PID gain for maintaining the temperature of the heater 121 at the predetermined temperature. Desirably, the P-gain included in the PID gain G₁ is larger than the P-gain included in the PID gain G₂. Such a configuration allows the controller 116 to determine to use a larger duty cycle for STEP 0 in which the PID gain G₁ is used, than for STEP 1 in which the PID gain G₂ is used. That is, such a configuration allows the temperature of the heater 121 to reach a predetermined temperature as quickly as possible in STEP 0. Desirably, the I-gain included in the PID gain G₂ is larger than the I-gain included in the PID gain G₁. According to such a configuration, the I-gain is increased for STEP 1 in which the PID gain G₂ is used and in which the variation of temperature is less than that in STEP 0 in which the PID gain G₁ is used. This makes it possible to effectively reduce steady-state deviation, and consequently to properly maintain the temperature of the heater 121 at the predetermined temperature.

The same as above can be said for the PID gain G₃ and the PID gain G₄ as well. The PID gain G₃ is a PID gain for causing the temperature of the heater 121 to reach a predetermined temperature (i.e., 220°C) as quickly as possible. The PID gain G₄ is a PID gain for maintaining the temperature of the heater 121 at the predetermined temperature. Desirably, the P-gain included in the PID gain G₃ is larger than the P-gain included in the PID gain G₄. Such a configuration allows the controller 116 to determine to use a larger duty cycle for STEP 3-2 in which the PID gain G₃ is used, than for STEP 3-3 in which the PID gain G₄ is used. That is, such a configuration allows the temperature of the heater 121 to reach a predetermined temperature as quickly as possible in STEP 3-2. Desirably, the I-gain included in the PID gain G₄ is larger than the I-gain included in the PID gain G₃. According to such a configuration, the I-gain is increased for STEP 3-3 in which the PID gain G₄ is used and in which the variation of temperature is less than that in STEP 3-2 in which the PID gain G₃ is used. This makes it possible to effectively reduce steady-state deviation, and consequently to properly maintain the temperature of the heater 121 at the predetermined temperature.

The voltage to be used is higher for the period in which the PID gain G₁ is used, than for the period in which the PID gain G₃ is used. In comparison to a low voltage, a high voltage leads to an increased amplitude of hunting that occurs when the P-gain and the I-gain are high. It is thus desirable that the P-gain and/or the I-gain included in the PID gain G₁ be less than the P-gain and/or the I-gain included in the PID gain G₃. This makes it possible to mitigate fluctuations in the deviation between the actual temperature and the target temperature during the period in which the PID gain G₁ is used.

The same as above can be said for the PID gain G₂ and the PID gain G₄ as well. The voltage to be used is higher for the period in which the PID gain G₂ is used, than for the period in which the PID gain G₄ is used. In comparison to a low voltage, a high voltage leads to an increased amplitude of hunting that occurs when the P-gain and the I-gain are large. It is thus desirable that the P-gain and/or the I-gain included in the PID gain G₂ be less than the P-gain and/or the I-gain included in the PID gain G₄. This makes it possible to mitigate fluctuations in the deviation between the actual temperature and the target temperature during the period in which the PID gain G₂ is used.

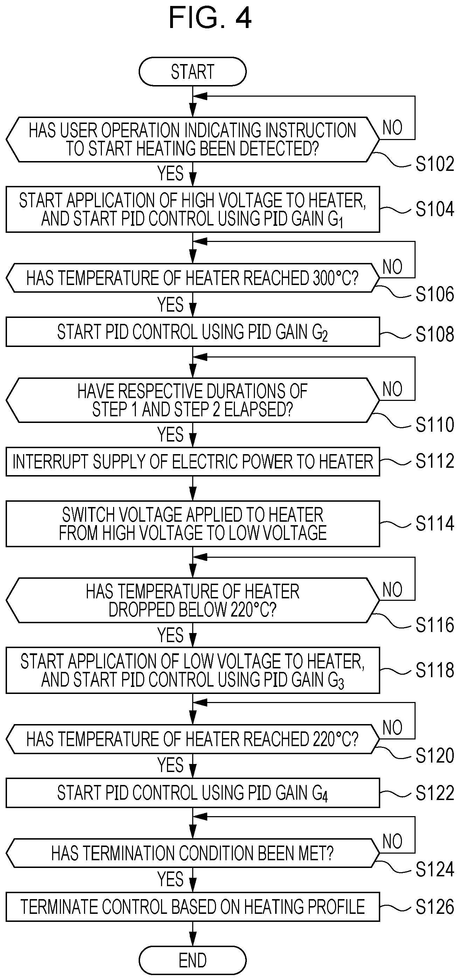

A procedure to be executed by the inhaler device 100 according to the embodiment is now described below with reference to Fig. 4.

Fig. 4 is a flowchart illustrating an exemplary procedure to be executed by the inhaler device 100 according to the embodiment. The flowchart illustrates an exemplary procedure for a case where the temperature control illustrated in Fig. 2 and Fig. 3 is to be executed.

As illustrated in Fig. 4, first, the controller 116 determines whether a user operation indicating an instruction to start heating has been detected (step S102). An example of a user operation indicating an instruction to start heating is an operation that the user performs on the inhaler device 100, such as operating, for example, a switch provided to the inhaler device 100. Another example of a user operation indicating an instruction to start heating is insertion of the stick substrate 150 into the inhaler device 100.

If it is determined that a user operation indicating an instruction to start heating has not been detected (step S102: NO), the controller 116 waits until such a user operation indicating an instruction to start heating is detected.

If it is determined that a user operation indicating an instruction to start heating has been detected (step S102: YES), the controller 116 starts application of a high voltage to the heater 121, and starts a PID control using the PID gain G₁ (step S104).

Subsequently, the controller 116 determines whether the temperature of the heater 121 has reached 300°C (step S106). At this time, the temperature of the heater 121 may be determined based on the electrical resistance of the heater 121.

If it is determined that the temperature of the heater 121 has not reached 300°C (step S106: NO), the controller 116 waits until the temperature of the heater 121 reaches 300°.

If it is determined that the temperature of the heater 121 has reached 300°C (step S106: YES), the controller 116 starts a PID control using the PID gain G₂ (step S108). That is, STEP 0 defined in the heating profile ends, and STEP 1 begins.

Subsequently, the controller 116 determines whether the respective durations of STEP 1 and STEP 2, which are durations defined in the heating profile, have elapsed (step 5110).

If it is determined that the respective durations of STEP 1 and STEP 2 have not elapsed (step S110: NO), the controller 116 waits until the respective durations of STEP 1 and STEP 2 defined in the heating profile elapse.

If it is determined that the respective durations of STEP 1 and STEP 2 have elapsed (step S110: YES), the controller 116 interrupts the supply of electric power to the heater 121 (step S112). That is, STEP 3-1 defined in the heating profile begins.

The controller 116 then switches the voltage applied to the heater 121 from the high voltage to a low voltage (step S114).

Subsequently, the controller 116 determines whether the temperature of the heater 121 has dropped below 220°C (step S116). At this time, the temperature of the heater 121 may be detected by a thermistor disposed in the vicinity of the heater 121.

If it is determined that the temperature of the heater 121 has not dropped below 220°C (step S116: NO), the controller 116 waits until the temperature of the heater 121 drops below 220°C.

If it is determined that the temperature of the heater 121 has dropped below 220°C (step S116: YES), the controller 116 starts application of the low voltage to the heater 121, and starts a PID control using the PID gain G₃ (step S118). That is, STEP 3-1 defined in the heating profile ends, and STEP 3-2 begins.

Subsequently, the controller 116 determines whether the temperature of the heater 121 has reached 220°C (step S120). At this time, the temperature of the heater 121 may be determined based on the electrical resistance of the heater 121.

If it is determined that the temperature of the heater 121 has not reached 220°C (step S120: NO), the controller 116 waits until the temperature of the heater 121 reaches 220°C.

If it is determined that the temperature of the heater 121 has reached 220°C (step S120: YES), the controller 116 starts a PID control using the PID gain G4 (step S122). That is, STEP 3-2 defined in the heating profile ends, and STEP 3-3 begins.

Once the duration of STEP 3 ends, control processes from STEP 4 onward are performed sequentially.

Subsequently, the controller 116 determines whether a termination condition has been met (step S124). An example of the termination condition is that the duration of STEP 9 has elapsed. Another example of the termination condition is that the number of puffs taken since the start of heating has reached a predetermined number of puffs.

If it is determined that the termination condition has not been met (step S124: NO), the controller 116 waits until the termination condition is met.

If it is determined that the termination condition has been met (step S124: YES), the controller 116 terminates the control based on the heating profile (step S126). The procedure then ends.

### 3. Supplemental remarks

Although a preferred embodiment of the present invention has been described above in detail with reference to the accompanying drawings, this is not intended to limit the invention to the specific example disclosed. Those having ordinary knowledge in the technical field to which the invention belongs would obviously conceive of various exemplary modifications and alterations within the scope of the technical ideas recited in the claims, and it is to be understood that such modifications and alterations also obviously fall within the technical scope of the invention.

For example, although the embodiment mentioned above is directed to an example in which the heating profile includes a target value for the temperature of the heater 121, this is not intended to limit the invention to such an example. It may suffice that the heating profile includes a target value for a parameter related to the temperature of the heater 121. Examples of a parameter related to the temperature of the heater 121 include, other than the temperature of the heater 121 itself described with reference to the above embodiment, the electrical resistance of the heater 121.

For example, although the above embodiment is directed to an example in which the heater 121 produces heat, this is not intended to limit the invention to such an example. In an alternative example, the heater 121 may be implemented as an electromagnetic induction source such as a coil that generates a magnetic field, and may inductively heat a susceptor by generating an alternating magnetic field. The susceptor that produces heat due to induction heating may be provided to the inhaler device 100, or may be included in the stick substrate 150. In this case, the temperature at which the aerosol source is heated, which is the temperature controlled based on the heating profile, is the temperature of the susceptor. The temperature of the susceptor can be estimated based on the electrical resistance of the susceptor that is calculated from, for example, the impedance of a circuit including the electromagnetic induction source.

The series of processes to be executed by individual devices described herein may be implemented by any one of software, hardware, and a combination of software and hardware. Programs constituting software are, for example, pre-stored in a recording medium (more specifically, a computer-readable non-transitory storage medium) disposed inside or outside the devices. Each program is, for example, loaded into a RAM at the time of execution by a computer that controls the devices described herein, and is executed by a processing circuit such as a CPU. Examples of the recording medium mentioned above include magnetic disks, optical disks, magneto-optical disks, and flash memories. The computer program mentioned above may be, for example, distributed via a network without use of a recording medium. Examples of the computer mentioned above may include an integrated circuit designed for a specific application such as an ASIC, a general-purpose processor that executes a function by reading a software program, and a computer that runs on a server and that is used for cloud computing. The series of processes to be executed by the devices described herein may be processed in a distributed manner by a plurality of computers.

The processes described herein with reference to the flowchart and the sequence diagrams do not necessarily have to be executed in the illustrated order. Some of the process steps may be executed in parallel. Additional process steps may be employed, or a subset of the process steps may be omitted.

Configurations described below also belong to the technical scope of the present invention.
(1) An aerosol generation system including:
   a power supply;
   a heater configured to heat an aerosol source by using electric power supplied from the power supply; and
   a controller configured to, through a PID control based on control information, control supply of electric power from the power supply to the heater, the control information being information for controlling a temperature at which the aerosol source is heated,
   in which the controller is configured to control the supply of electric power from the power supply to the heater while switching parameters to be applied to the PID control, the parameters being switched in accordance with a time elapsed after start of a control based on the control information or in accordance with transition of the temperature at which the aerosol source is heated.
(2) The aerosol generation system according to the item (1),
   in which a period during which the control based on the control information is performed includes a first period, and a second period subsequent to the first period,
   in which the first period is a period during which the temperature at which the aerosol source is heated rises to reach a predetermined temperature, and
   in which the second period is a period during which the temperature at which the aerosol source is heated is maintained at the predetermined temperature.
(3) The aerosol generation system according to the item (2),
   in which a P-gain to be applied for the first period is larger than a P-gain to be applied for the second period.
(4) The aerosol generation system according to the item (2) or (3),
   in which an I-gain to be applied for the second period is larger than an I-gain to be applied for the first period.
(5) The aerosol generation system according to any one of the items (2) to (4),
   in which the first period is a period from when the supply of electric power to the heater is started until the temperature at which the aerosol source is heated rises to reach the predetermined temperature.
(6) The aerosol generation system according to the item (5),
   in which the first period is a period from when the control based on the control information is started until the temperature at which the aerosol source is heated rises to reach the predetermined temperature.
(7) The aerosol generation system according to the item (5),
   in which the first period is a period that is subsequent to when the supply of electric power to the heater is interrupted at a point during the control based on the control information, and that is from when the supply of electric power to the heater is resumed until the temperature at which the aerosol source is heated rises to reach the predetermined temperature.
(8) The aerosol generation system according to any one of the items (2) to (7),
   in which the first period is triggered to end when the temperature at which the aerosol source is heated reaches the predetermined temperature.
(9) The aerosol generation system according to any one of the items (2) to (8),
   in which the period during which the control based on the control information is performed includes a third period, and a fourth period subsequent to the third period,
   in which the third period is a period during which a first voltage is applied to the heater, and
   in which the fourth period is a period during which a second voltage lower than the first voltage is applied to the heater.
(10) The aerosol generation system according to the item (9),
   in which a P-gain to be applied for the third period is smaller than a P-gain to be applied for the fourth period.
(11) The aerosol generation system according to the item (9) or (10),
   in which an I-gain to be applied for the third period is smaller than an I-gain to be applied for the fourth period.
(12) The aerosol generation system according to any one of the items (9) to (11),
   in which the third period includes the first period and the second period.
(13) The aerosol generation system according to any one of the items (9) to (12),
   in which the fourth period includes the first period and the second period.
(14) The aerosol generation system according to any one of the items (9) to (13),
   in which the period during which the control based on the control information is performed includes a fifth period between the third period and the fourth period, the fifth period being a period during which the supply of electric power to the heater is interrupted, and
   in which the controller is configured to, in the fifth period, perform switching of a voltage to be applied to the heater from the first voltage to the second voltage.
(15) The aerosol generation system according to the item (14),
   in which the period during which the control based on the control information is performed includes, immediately after the fifth period, the first period included in the fourth period.
(16) The aerosol generation system according to any one of the items (9) to (15),
   in which a maximum temperature at which the aerosol source is heated in the third period is higher than a maximum temperature at which the aerosol source is heated in the fourth period.
(17) The aerosol generation system according to any one of the items (1) to (16),
   in which the temperature at which the aerosol source is heated and that is controlled based on the control information is a temperature of the heater.
(18) The aerosol generation system according to any one of the items (1) to (17), further including
   a substrate containing the aerosol source that is heated by the heater
(19) A control method for controlling an aerosol generation system, the aerosol generation system including
   a power supply, and
   a heater configured to heat an aerosol source by using electric power supplied from the power supply,
   the control method including
   through a PID control based on control information, controlling supply of electric power from the power supply to the heater, the control information being information for controlling a temperature at which the aerosol source is heated,
   in which the controlling of the supply of electric power from the power supply to the heater includes controlling the supply of electric power from the power supply to the heater while switching parameters to be applied to the PID control, the parameters being switched in accordance with a time elapsed after start of a control based on the control information or in accordance with transition of the temperature at which the aerosol source is heated.
(20) A program to be executed by a computer configured to control an aerosol generation system, the aerosol generation system including
   a power supply, and
   a heater configured to heat an aerosol source by using electric power supplied from the power supply,
   the program causing the computer to function as
   a controller configured to, through a PID control based on control information, control supply of electric power from the power supply to the heater, the control information being information for controlling a temperature at which the aerosol source is heated,
   in which the controller is configured to control the supply of electric power from the power supply to the heater while switching parameters to be applied to the PID control, the parameters being switched in accordance with a time elapsed after start of a control based on the control information or in accordance with transition of the temperature at which the aerosol source is heated.

### Reference Signs List

- 100: inhaler device
- 111: power supply
- 112: sensor
- 113: notifier
- 114: memory
- 115: communicator
- 116: controller
- 121: heater
- 140: holder
- 141: internal space
- 142: opening
- 143: bottom
- 144: heat insulator
- 150: stick substrate
- 151: substrate
- 152: inhalation port

## Claims

1. An aerosol generation system comprising;
a power supply;
a heater configured to heat an aerosol source by using electric power supplied from the power supply; and
a controller configured to, through a PID control based on control information, control supply of electric power from the power supply to the heater, the control information being information for controlling a temperature at which the aerosol source is heated,
wherein the controller is configured to control the supply of electric power from the power supply to the heater while switching parameters to be applied to the PID control, the parameters being switched in accordance with a time elapsed after start of a control based on the control information or in accordance with transition of the temperature at which the aerosol source is heated.

2. The aerosol generation system according to claim 1,
wherein a period during which the control based on the control information is performed includes a first period, and a second period subsequent to the first period,
wherein the first period is a period during which the temperature at which the aerosol source is heated rises to reach a predetermined temperature, and
wherein the second period is a period during which the temperature at which the aerosol source is heated is maintained at the predetermined temperature.

3. The aerosol generation system according to claim 2,
wherein a P-gain to be applied for the first period is larger than a P-gain to be applied for the second period.

4. The aerosol generation system according to claim 2 or 3,
wherein an I-gain to be applied for the second period is larger than an I-gain to be applied for the first period.

5. The aerosol generation system according to any one of claims 2 to 4,
wherein the first period is a period from when the supply of electric power to the heater is started until the temperature at which the aerosol source is heated rises to reach the predetermined temperature.

6. The aerosol generation system according to claim 5,
wherein the first period is a period from when the control based on the control information is started until the temperature at which the aerosol source is heated rises to reach the predetermined temperature.

7. The aerosol generation system according to claim 5,
wherein the first period is a period that is subsequent to when the supply of electric power to the heater is interrupted at a point during the control based on the control information, and that is from when the supply of electric power to the heater is resumed until the temperature at which the aerosol source is heated rises to reach the predetermined temperature.

8. The aerosol generation system according to any one of claims 2 to 7,
wherein the first period is triggered to end when the temperature at which the aerosol source is heated reaches the predetermined temperature.

9. The aerosol generation system according to any one of claims 2 to 8,
wherein the period during which the control based on the control information is performed includes a third period, and a fourth period subsequent to the third period,
wherein the third period is a period during which a first voltage is applied to the heater, and
wherein the fourth period is a period during which a second voltage lower than the first voltage is applied to the heater.

10. The aerosol generation system according to claim 9,
wherein a P-gain to be applied for the third period is smaller than a P-gain to be applied for the fourth period.

11. The aerosol generation system according to claim 9 or 10,
wherein an I-gain to be applied for the third period is smaller than an I-gain to be applied for the fourth period.

12. The aerosol generation system according to any one of claims 9 to 11,
wherein the third period includes the first period and the second period.

13. The aerosol generation system according to any one of claims 9 to 12,
wherein the fourth period includes the first period and the second period.

14. The aerosol generation system according to any one of claims 9 to 13,
wherein the period during which the control based on the control information is performed includes a fifth period between the third period and the fourth period, the fifth period being a period during which the supply of electric power to the heater is interrupted, and
wherein the controller is configured to, in the fifth period, perform switching of a voltage to be applied to the heater from the first voltage to the second voltage.

15. The aerosol generation system according to claim 14,
wherein the period during which the control based on the control information is performed includes, immediately after the fifth period, the first period included in the fourth period.

16. The aerosol generation system according to any one of claims 9 to 15,
wherein a maximum temperature at which the aerosol source is heated in the third period is higher than a maximum temperature at which the aerosol source is heated in the fourth period.

17. The aerosol generation system according to any one of claims 1 to 16,
wherein the temperature at which the aerosol source is heated and that is controlled based on the control information is a temperature of the heater.

18. The aerosol generation system according to any one of claims 1 to 17, further comprising
a substrate containing the aerosol source that is heated by the heater.

19. A control method for controlling an aerosol generation system, the aerosol generation system including
a power supply, and
a heater configured to heat an aerosol source by using electric power supplied from the power supply,
the control method comprising
through a PID control based on control information, controlling supply of electric power from the power supply to the heater, the control information being information for controlling a temperature at which the aerosol source is heated,
wherein the controlling of the supply of electric power from the power supply to the heater includes controlling the supply of electric power from the power supply to the heater while switching parameters to be applied to the PID control, the parameters being switched in accordance with a time elapsed after start of a control based on the control information or in accordance with transition of the temperature at which the aerosol source is heated.

20. A program to be executed by a computer configured to control an aerosol generation system, the aerosol generation system including
a power supply, and
a heater configured to heat an aerosol source by using electric power supplied from the power supply,
the program causing the computer to function as
a controller configured to, through a PID control based on control information, control supply of electric power from the power supply to the heater, the control information being information for controlling a temperature at which the aerosol source is heated,
wherein the controller is configured to control the supply of electric power from the power supply to the heater while switching parameters to be applied to the PID control, the parameters being switched in accordance with a time elapsed after start of a control based on the control information or in accordance with transition of the temperature at which the aerosol source is heated.
